# EUROPÄISCHE PATENTSCHRIFT

(11) **EP 3 236 088 B1**
(45) Veröffentlichungstag und Bekanntmachung des Hinweises auf die Patenterteilung: **02.09.2020**
(21) Anmeldenummer: 17167464.1
(22) Anmeldetag: 21.04.2017
(51) Int. Cl.: F16B 12/42, F16B 12/48, A47B 13/02, A47C 5/12, A47C 4/03

(54) **MÖBELSTÜCK MIT EINEM ECKVERBINDER**
PIECE OF FURNITURE WITH A CORNER CONNECTOR
ÉLÉMENT DE MEUBLE AYANT UNE ÉQUERRE D'ASSEMBLAGE

(30) Priorität: 21.04.2016 DE 102016206748
(43) Veröffentlichungstag der Anmeldung: 25.10.2017
(73) Patentinhaber: Habermaaß GmbH, 96476 Bad-Rodach (DE)
(72) Erfinder: Wirsing, Michael, 96450 Coburg (DE)
(74) Vertreter: Grünecker Patent- und Rechtsanwälte PartG mbB

(56) Entgegenhaltungen:
- CN-U- 201 526 570
- CN-Y- 2 489 136
- FR-A1- 2 753 241
- US-A- 2 477 997
- US-A- 3 765 541
- US-A1- 2008 302 748

## Beschreibung

Die vorliegende Erfindung betrifft ein Möbelstück mit einer Tragstruktur und wenigstens einem Bein, mit den Merkmalen des Oberbegriffes des ersten Anspruches.

Es ist eine Vielzahl von Möbelstücken, beispielsweise Stühle, Tische, Betten, Schränke und dergleichen bekannt, bei denen eine Tragstruktur, beispielsweise in Form einer Sitzfläche, Tischplatte, Bettrahmen oder Korpus, realisiert ist. Diese Tragstruktur ist mit einem oder mehreren und typischerweise vier Beinen verbunden, welche die Gewichtskraft des Möbelstückes sowie zusätzliche, im Rahmen der Benutzung des Möbelstückes von außen aufgebracht Kräfte in den Boden, auf dem das Möbelstück aufgestellt ist, ableiten. Die Verbindung der Tragstruktur mit den Beinen muss geeignet sein, die auftretenden Kräfte sicher aufnehmen und leiten zu können und den ästhetischen Ansprüchen des Benutzers entsprechen.

Insbesondere für den Einsatz in öffentlichen Einrichtungen, wie beispielsweise Schulen oder Kindergärten herrschen hohe Ansprüche an die Kippsicherheit und dauerhafte Stabilität der Möbel. Es ist in diesen Einsatzgebieten weiterhin von Vorteil, wenn die Möbel möglichst platzsparend lagerbar sind und die Verbindung zwischen den Beinen und der Tragstruktur vor einem äußeren Zugriff geschützt sind.

Die GB 1 455 295 offenbart ein Möbelstück der eingangs genannten Gattung, bei welcher die Verbindung durch eine Schraube mit einer Mutter realisiert ist, wobei die Mutter verdrehsicher in einem Schlitz eines Verbindungskörpers aufgenommen ist. Jener Verbindungskörper weist zusätzlich eine Bohrung auf, durch die sich die Schraube erstreckt um in die Mutter eingreifen zu können. Der tonnenförmige Verbindungskörper ist in einer runden Bohrung in einer Tischplatte aufgenommen. Die Schraube erstreckt sich durch jeweilige Bohrungen in dem Tischbein und der Tischplatte sowie durch den Verbindungskörper und ist darin fest mit der Mutter verschraubt. Dabei ist das Tischbein seitlich von außen an die Tischplatte gepresst.

Die EP 1 310 683 offenbart ein Regal, bei dem in eine Deckplatte tonnenförmige Mutterelemente mit einer Gewindebohrung eingebracht werden. Die Beine werden seitlich von außen an die Deckplatte angebracht. Dazu erstreckt sich eine Schraube von außen durch eine Bohrung in dem Bein, weiterhin durch eine Bohrung in der Deckplatte in das Mutterelement, wodurch ein kraftschlüssige Verbindung zwischen einer seitlichen Fläche der Deckplatte und einer seitlichen Fläche des Beines hergestellt wird.

In diesen beiden Dokumenten wird das Bein mit einer Schraube seitlich an die Tischplatte bzw. Sitzfläche herangezogen, sodass die Kraftübertragung über in Richtung der Kontaktflächen wirkende Reibung zwischen den aufeinandergepressten Kontaktflächen erfolgt. Die Beine sind direkt mit einer Seite der Tischplatte bzw. Sitzfläche verbunden, wobei eine seitliche Bohrung in die Tischplatte bzw. Sitzfläche erforderlich ist.

Die WO 2014/135919 offenbart eine verschwenkbare Verbindung für ein Möbelbein. Ein kugelsegmentförmiges Basisteil wird dazu von unten an eine Platte angeschraubt. Durch ein Langloch in dem Basisteil wird eine aus einem Bein herausragende Schraube innerhalb des Basisteils verschraubt und somit die Verbindung zwischen Stuhlbein und Basisteil hergestellt. Durch eine Verschiebung der Schraube innerhalb des Langloches kann der Winkel des Beines relativ zur Platte angepasst werden. Um einen sicheren Stand des Möbelstücks zu gewährleisten, muss die Ausrichtung der Beine einzeln aufeinander abgestimmt werden.

Die DE GM 77 07 415 offenbart einen Stuhl, bei dem unter den vier Ecken einer Sitzfläche in entsprechenden Bohrungen Innengewinde vorgesehen sind, in welche aus den Stuhlbeinen hervorragende Schrauben von unten eingeschraubt werden.

Die gattungsgemäße US 2 477 997 A offenbart ein Verbindungselement für Rohrelemente von Möbelstücken. Das Verbindungselement ist dafür vorgesehen drei Rohrelemente anzukoppeln, wobei das Ende eines Rohrelements über seine flachen Seitenflächen in das Verbindungselement aufgenommen wird. Die übrigen zwei Rohrelemente werden an gegenüberliegenden Seiten des Verbindungselements außen angesetzt und über einen Gewindestab von außen zusammengeklemmt. Die Kräfte der beiden Rohrelemente werden von dem Bein an das Verbindungselement und von diesem an das weitere Rohrelement übertragen.

Die US 3 765 541 A offenbart längliche Bauelemente für Möbelstücke, welche mittels flachen Verbindungselementen verbunden werden. Die Verbindungselemente weisen eine Bohrung auf, über welche ein Eckpfeiler angeschlossen werden kann. Die Verbindung des Eckpfeilers mit dem Verbindungselement erfolgt über einen Gewindestab, der durch die Bohrung des Verbindungselementes geführt und mittels eines kugelförmigen Elementes gesichert wird. Zwei Abstandshalter sind über und unter dem Verbindungselement platziert.

Die CN 201 526 570 U offenbart einen Rohrverbinder zur winkeligen Verbindung von Säulen- und Rohrelementen für Möbel aus Eisenrohren. Der Rohrverbinder verfügt über vertikal angeordnete Aufnahmen für die Säulenelemente sowie horizontal angeordnete Aufnahmen für die Rohrelemente. Die Säulenelemente können innerhalb des Rohrverbinders gegenseitig miteinander verschraubt werden. Die Rohrelemente werden mittels separater Steckverbindungen von außen an den horizontalen Aufnahmen des Rohrelements befestigt.

Die FR 2 753 241 A1 offenbart ein Verbindungselement zur modularen Konstruktion von Büromöbeln. Innerhalb des Verbindungselementes befindet sich ein Rohrstück, an dessen Seitenflächen bis zu vier Querträger angeschlossen werden können. An die Unterseite des Verbindungselementes kann ein Unterteil befestigt werden. Die Befestigung erfolgt mittels eines durch das Rohrstück geführten Gewindestiftes. Das Unterteil dient zur Aufnahme eines Stutzenelementes, welches mittels Verschraubung an dem Unterteil befestigt werden kann.

Der vorliegenden Erfindung liegt die Aufgabe zugrunde, ein Möbelstück der obigen Gattung dahingehend zu verbessern, dass die Kippsicherheit, Stabilität und Ästhetik der Verbindung zwischen den Beinen und der Tragstruktur eines Möbelstücks erhöht wird, wobei die Verbindung ausreichend große Belastungen sicher übertragen können soll und die Tragstruktur-Bein-Verbindung vor äußeren Zugriffen geschützt sein soll.

Die Aufgabe wird erfindungsgemäß gelöst mit einem Möbelstück gemäß Anspruch 1.

Der Eckverbinder verbessert die Kopplung des Beines mit der Tragstruktur und die Kraftübertragung sowie Positionierung dieser Elemente. Daraus folgt eine Stabilisierung der Gesamtkonstruktion bei ausreichend hoher Kippsicherheit. Durch die Ausführung der Verbindung von Bein und Tragstruktur innerhalb des Eckverbinders kann die Verbindung sowohl optisch als auch mechanisch nach außen hin verborgen werden. Dadurch wird einerseits der äußere Zugriff auf die Verbindung behindert und andererseits der ästhetische Eindruck des Möbelstückes und der Verbindung verbessert.

Durch die Ausbildung eines Verbindungselementes kann die Verbindung zwischen Tragstruktur und Bein freier von der verwendungsgemäßen Geometrie des Strukturelements ausgeführt sein und eine bessere funktionale Trennung zwischen Tragstruktur und Tragstruktur-Bein-Verbindung erreicht werden. Dies erlaubt eine große Freiheit sowohl bei der Auslegung der Tragstruktur als auch bei der Verbindung zwischen Tragstruktur und Bein und eine geringe Beeinflussung der Tragstruktur und der Verbindung untereinander.

Die kraftübertragende Verbindung des Beines mit dem Verbindungselement sichert die Stabilität und Standfestigkeit des Möbelstückes. Die Ausführung dieser Verbindung innerhalb des Eckverbinders trägt zur Ästhetik des Möbelstückes bei und sichert die Verbindung vor äußerem Zugriff um ihre Sicherheit weiter zu erhöhen. Eine lösbare Verbindung erlaubt eine De- und Wiedermontage des Möbelstückes um es demontiert besser lager-und transportierbar zu machen.

Möglicherweise kann der Eckverbinder wenigstens einen Teil einer von der Tragstruktur auf das Bein wirkenden Kraft übertragen. Dadurch kann die Verbindung der Tragstruktur mit dem Bein entlastet werden sowie eine günstige Kraftleitung der Tragstruktur an das Bein gewährleistet werden.

Erfindungsgemäß weist der Eckverbinder eine Tragstrukturaufnahme auf, in welcher das Verbindungselement zumindest teilweise, insbesondere formschlüssig, aufgenommen ist. Damit wird eine gute Kopplung zwischen Verbindungselement und Eckverbinder sowie eine günstige Kraftleitung zwischen dem Eckverbinder und dem Verbindungselement ermöglicht. Ein Formschluss zwischen beiden Elementen sichert deren gute Positionierung relativ zueinander sowie eine gut kalkulierbare Übertragung der Kräfte. Die Verdreh- und Verkippsicherheit des Eckverbinders relativ zu dem Verbindungselement und zur Tragstruktur wird dadurch erhöht. Die Aufnahme in dem Eckverbinder spart Bauraum und verbessert die ästhetische Gestaltung. Gemäß einer Variante kann der Eckverbinder eine Beinaufnahme aufweisen, in welcher das Bein wenigstens teilweise, insbesondere formschlüssig, aufgenommen ist. Dadurch wird eine günstige Kraftleitung zwischen Eckverbinder und Bein gewährleistet. Der Formschluss zwischen Bein und Eckverbinder erlaubt eine gut definierbare Positionierung dieser Bauteile zueinander sowie eine verbesserte Kraftleitung. Die Verdreh- und Verkippsicherheit des Beines relativ zu dem Eckverbinder wird dadurch erhöht. Die Aufnahme eines Teiles des Beines im Eckverbinder erlaubt gleichzeitig eine Platzersparnis der Konstruktion.

In einer Weiterbildung der Erfindung kann die Stirnfläche des Eckverbinders an einer Oberfläche der Tragstruktur abgestützt sein. Eine derartige Abstützung sichert eine gute Position des Eckverbinders relativ zur Tragstruktur, unabhängig von den tatsächlich wirksamen Kräften zwischen diesen Bauteilen. Die Abstützung erlaubt eine günstige Kraftleitung von der Tragstruktur an das Bein.

Insbesondere kann das Bein einen Absatz aufweisen, wobei eine äußere Umfangsfläche des Eckverbinders etwa fluchtend zu dem Absatz ausgerichtet ist. Damit kann der Eindruck einer durchgängigen und glatten Oberfläche erzeugt werden. Durch den fluchtenden Verlauf der Oberfläche des Eckverbinders mit einem Absatz des Beines kann so die Ästhetik der Konstruktion verbessert werden.

Besonders günstig kann eine äußere Stirnfläche des Eckverbinders an einer Oberfläche des Beines, insbesondere an dem Absatz, abgestützt sein. Dadurch wird eine gute Positionierung des Beines relativ zum Eckverbinder ermöglicht. Weiterhin wird die Beibehaltung der Position dieser Bauteile relativ zueinander, auch bei auftretenden Kräften zwischen ihnen, sichergestellt um die Stabilität und Kippsicherheit des Möbelstückes zu gewährleisten. Eine Abstützung der Stirnfläche des Eckverbinders an einem Absatz des Beines erlaubt dabei eine möglichst einfache Konstruktion mit gleichzeitig geringem Fertigungs- und Montageaufwand der Verbindung.

In einer Ausführung kann der Eckverbinder winkelstückartig zwei Rohrabschnitte aufweisen, wobei in einem der Rohrabschnitte die Tragstrukturaufnahme ausgebildet sein kann und in dem anderen der Rohrabschnitte die Beinaufnahme ausgebildet sein kann. Dadurch kann die Steifigkeit des Eckverbinders gegen Verwinden oder Verbiegen verbessert werden. Durch die abgerundeten Oberflächen der Rohrabschnitte ist der Eckverbinder verletzungsunanfälliger. Eine winkelstückartige Ausführung mit zwei Abschnitten erlaubt einen einfachen Aufbau sowie eine günstige Fertigbarkeit des Eckverbinders. Der Winkel zwischen Beinaufnahme der Tragstrukturaufnahme kann bei der Fertigung des Eckverbinders wie gewünscht gewählt werden.

Gemäß einer Fortbildung kann das Bein einen zapfenartigen Abschnitt aufweisen, welcher zumindest bereichsweise mit einer inneren Oberfläche der Beinaufnahme in Kontakt ist. Eine Ausführung des Beines mit einem zapfenartigen Abschnitt begünstigt die Verbindung des Beines im Eckverbinder, vor allem wenn das Bein in einer Aufnahme in dem Eckverbinder aufgenommen ist. Durch den Kontakt des zapfenartigen Abschnitts mit einer Innenoberfläche kann eine Führung des zapfenartigen Abschluss und folglich des gesamten Beines relativ zu dem Eckverbinder erfolgen um den Eckverbinder zu positionieren. Außerdem kann durch den Kontakt eine günstige Kraftübertragung zwischen Eckverbinder und Bein gewährleistet werden.

Gemäß einer Ausgestaltung können das Verbindungselement und das Bein innerhalb des Eckverbinders in direktem Kontakt miteinander stehen, wobei von der Tragstruktur an das Bein übertragene Kräfte wenigstens annähernd vollständig über diesen Kontakt übertragen werden können. Eine derartige Ausführung entlastet den Eckverbinder, da dieser bei einer annähernd vollständigen Kraftübertragung über den Kontakt des Verbindungselementes mit dem Bein vergleichsweise geringere Kräfte überträgt.

Vorteilhafterweise kann das Verbindungselement wenigstens eine abgeflachte Seite aufweisen, welche in Kontakt mit einer Haltefläche des Eckverbinders ist und insbesondere die Verdrehbarkeit des Verbindungselementes beschränken kann. Durch den Kontakt der abgeflachten Seite des Verbindungselementes mit der Haltefläche des Eckverbinders wird die relative Position dieser Bauteile relativ zueinander auf einfache Weise definiert. Insbesondere durch die Beschränkung der Verdrehbarkeit lässt sich eine Winkelposition der beiden Bauteile relativ zueinander klar festlegen um daraus folgend auch die Winkelposition zwischen Tragstruktur und Eckverbinder sowie Tragstruktur und Bein zu orientieren.

Erfindungsgemäß erstreckt sich ein Verbindungsmittel wenigstens bereichsweise durch das Bein, den Eckverbinder und das Verbindungselement.

Durch ein derartiges Verbindungsmittel können die genannten drei Elemente mit geringem konstruktiven Aufwand und wenigen zusätzlichen Bauteilen günstig miteinander verbunden werden.

Erfindungsgemäß ist das Verbindungsmittel durch ein Fixierungsteil in seiner Position gehalten, wobei das ganze Fixierungsteil, insbesondere formschlüssig, in einem Aufnahmeraum in dem Eckverbinder aufgenommen ist.

Durch das Halten des Verbindungsmodells in Position sichert das Fixierungsteil die Verbindung zwischen Beinen, Eckverbinder und Verbindungselement. Weiterhin ist das Fixierungsteil vor äußerem Eingriff geschützt. Die formschlüssige Aufnahme des Fixierungsteils in dem Aufnahmeraum ermöglicht eine gute Positionierung des Fixierungsteils, die während der Montage und Verwendung des Möbelstücks aufrechterhalten werden kann. Wenn das Fixierungsteil zum Beispiel als Mehrkantmutter ausgeführt ist, wird deren Halten erleichtert, da dazu lediglich der Eckverbinder gehalten werden muss.

Gemäß einer Ausgestaltung kann sich zwischen der Tragstrukturaufnahme und dem Aufnahmeraum wenigstens bereichsweise eine Trennwand erstecken, an welcher insbesondere das Verbindungselement und/oder das Fixierungsteil anliegen können. Die Trennwand erlaubt eine räumliche Trennung zwischen dem Verbindungselement und dem Fixierungsteil innerhalb des Eckverbinders, wodurch diese beiden Bauteile unabhängig voneinander positionierbar sind. Durch das Anliegen an der Trennwand kann die Beweglichkeit von Fixierungsteil und Verbindungselement in dem Eckverbinder beschränkt werden um beide Bauelemente eindeutig zu positionieren.

In einer günstigen Fortbildung kann das Fixierungsteil an wenigstens einer Führungsfläche des Eckverbinders anliegen, welche die Bewegbarkeit des Fixierungsteiles beschränkt. Das Anliegen des Fixierungsteiles an einer Führungsfläche ist eine günstige Maßnahme um das Fixierungsteil gegen ein Verschieben und/oder Verdrehen zu sichern und dabei dessen Funktion zum Halten des Verbindungsmittels zu gewährleisten.

Im Folgenden wird die Erfindung anhand einer beispielhaften Ausführungsform näher erläutert.

Es zeigen:
- Figur 1: eine perspektivische Außenansicht eines erfindungsgemäßen Stuhles mit vier Stuhlbeinen, vier Eckverbindern und einer Sitzfläche,
- Figur 2: eine perspektivische Explosionsdarstellung einer Verbindung eines Stuhlbeines aus Figur 1 mit der Sitzfläche,
- Figur 3: eine perspektivische Außenansicht eines Eckverbinders aus Figur 1, und
- Figur 4: eine Schnittdarstellung einer Verbindung eines Stuhlbeines aus Figur 1 mit der Sitzfläche, wobei die Schnittebene durch die Mittelachsen der beiden Rohrabschnitte des winkelstückartigen Eckverbinders aufgespannt wird.

Für identische Merkmale werden in den Figuren gleiche Bezugszeichen verwendet.

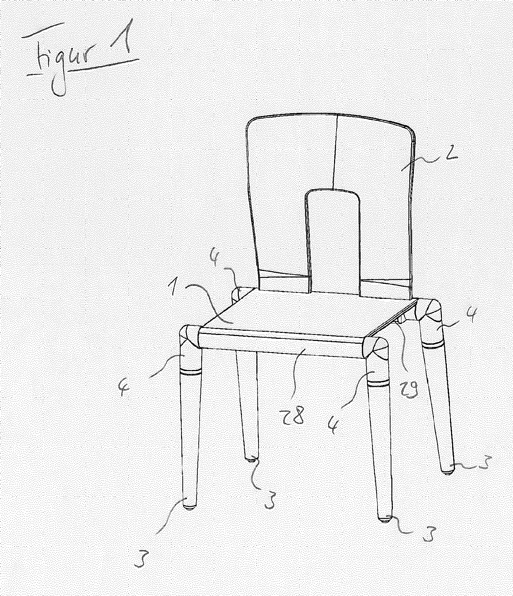

In der gezeigten Ausführungsform wird das erfindungsgemäße Möbelstück durch einen Stuhl repräsentiert, wobei eine Tragstruktur eine Vorderzarge 28 aufweist, welche von unten an einer Sitzfläche 1 befestigt ist und die Sitzfläche 1 stabilisiert. In alternativen Ausführungsformen kann das Möbelstück beispielsweise ein Tisch oder Stuhl sein, wobei die Tragstruktur in Form einer selbsttragenden Sitzfläche oder Tischplatte ausgeführt sein kann. Weiterhin ist auch ein Bett mit einem Bettrahmen als Tragstruktur oder ein Möbelstück mit einem Rahmen oder Korpus als Tragstruktur denkbar, wobei eine Sitzfläche oder Tischplatte an diesem Rahmen oder Korpus befestigt sein kann. Die Tragstruktur kann auch als Teil eines Korpus, Rahmens oder einer Zarge ausgeführt sein. Eine zweite, der Vorderzarge 28 in Form und Funktion entsprechenden Hinterzarge 29 befindet sich im hinteren Bereich des Stuhles und ist in Figur 1 zum größten Teil von der Sitzfläche verdeckt.

An einer hinteren Seite der Sitzfläche 1 ist eine Stuhllehne 2 angebracht. An den vier äußeren Ecken der etwa rechteckig ausgebildeten Sitzfläche 1 ist jeweils ein Stuhlbein 3 mit einer der Zargen 28, 29 verbunden, wobei dieser Verbindung innerhalb jeweils eines Eckverbinders 4 ausgeführt ist. Der Eckverbinder kann in einer Alternative als zusätzlicher Eckverbinder, also im Verhältnis zu den anderen Elementen des Möbelstückes separat ausgebildet sein. Die Alternative ist beispielsweise in den Figuren gezeigt. Denkbar ist als weitere Alternative auch eine integrale Ausbildung des Eckverbinders mit anderen Elementen, wie beispielsweise einem Bein oder einer Tragstruktur

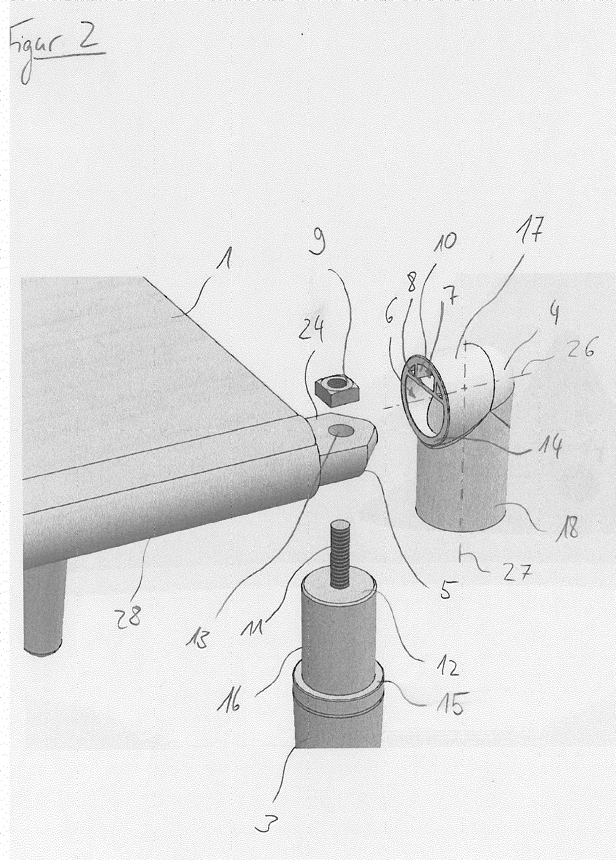

Figur 2 zeigt die Verbindung der Sitzfläche 1 mit dem vorderen linken Bein 3 in Explosionsdarstellung. Seitlich, und wenn der Stuhl auf ebenem Grund steht etwa horizontal, ragt ein Verbindungselement 5 von der Vorderzarge 28 hervor. Das Verbindungselement 5 weist an seiner oberen Seite, welche in Figur 2 dem Betrachter zugewandt ist, eine abgeflachte Seite 24 auf.

Dieses Verbindungselement 5 ist in einer Tragstrukturaufnahme 6 des Eckverbinders 4 aufgenommen. Die äußeren Oberflächen des Verbindungselementes 5 sind dabei entsprechend den inneren Oberflächen der Tragstrukturaufnahme 6 geformt, sodass ein Formschluss zwischen Verbindungselement 5 und Tragstrukturaufnahme 6 entsteht.

Oberhalb der Tragstrukturaufnahme 6 weist der Eckverbinder 4 einen Aufnahmeraum 7 auf, wobei der Aufnahmeraum 7 und die Tragstrukturaufnahme 6 durch eine Trennwand 8 voneinander getrennt sind.

In dem Aufnahmeraum 7 ist eine Mehrkantmutter 9 aufgenommen, welche als Fixierungsteil wirkt. Innerhalb des Aufnahmeraumes 7 ist die als Vierkant ausgeführte Mutter 9 zwischen gegenüberliegenden Führungsflächen 10 geführt, wobei ihre Beweglichkeit durch die Führungsflächen 10 eingeschränkt ist und sie sich innerhalb des Aufnahmeraumes 7 nicht verdrehen kann.

Als Verbindungsmittel dient in der gezeigten Ausführungsform eine Stockschraube 11, deren eines Ende in eine Stirnseite 12 des Stuhlbeines 3 eingeschraubt ist und deren zweites Ende sich durch den Eckverbinder 4 und durch eine Bohrung 13 im Verbindungselement 5 erstreckt und fest mit der Vierkantmutter 9 verschraubt ist. Durch diese Verschraubung wird die Stockschraube 11 in ihrer Position gehalten.

Eine äußere Stirnfläche 14 des Eckverbinders 4 liegt flächig an einer Außenseite der Vorderzarge 28 an, sodass das Verbindungselement 5 einmal vollständig von der anliegenden Stirnfläche 14 umringt wird, sodass das Verbindungselement 5 vollständig in der Tragstrukturaufnahme 6 aufgenommen ist und somit vollständig in dem Eckverbinder 4 verborgen ist.

Das Stuhlbein 3 ist rotationssymmetrisch ausgeführt und weist einen umlaufenden Absatz 15 auf. Unterhalb des Absatzes 15 verjüngt sich das Bein etwa kegelstumpfartig, wobei sein Durchmesser nach unten hin abnimmt. Der Absatz 15 bildet eine horizontale Fläche aus, welche senkrecht zu einer Mittelachse des Beines verläuft, wobei das Stuhlbein 3 oberhalb des Absatzes einen geringeren Durchmesser als unterhalb des Absatzes aufweist und zylinderförmig ausgebildet ist. Dieser zylinderförmige Teil mit dem geringeren Durchmesser bildet einen zapfenartigen Abschnitt 16 aus.

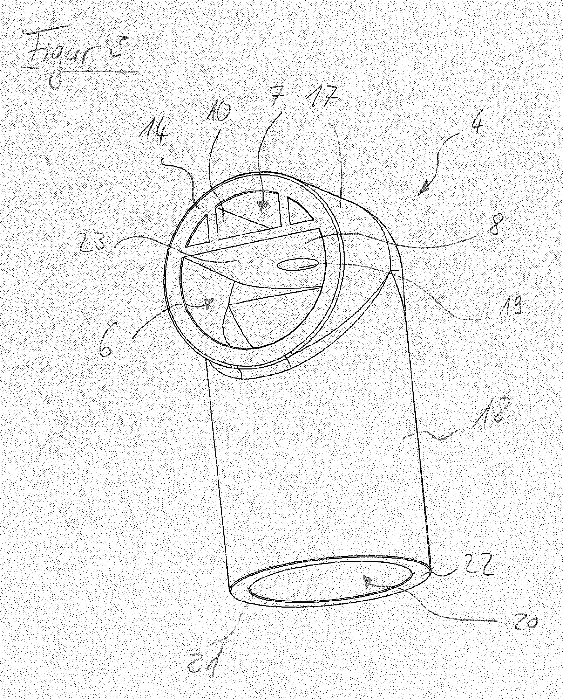

Der Eckverbinder 4 weist einen ersten Rohrabschnitt 17 einen zweiten Rohrabschnitt 18 auf, welche etwa rechtwinklig zueinander angeordnet sind. In alternativen Ausführungsformen könnte der Winkel zwischen den beiden Rohrabschnitten 17, 18 auch einen anderen Betrag haben. Die beiden Rohrabschnitte 17, 18 haben eine zylindrische Form. In dem ersten Rohrabschnitt 17 ist die Tragstrukturaufnahme 6 ausgebildet. Die beiden Rohrabschnitte haben jeweils einen kreisrunden Querschnitt, wobei der Mittelpunkt des jeweiligen Querschnittes für den ersten Rohrabschnitt 17 eine Mittelachse des ersten Rohrabschnittes 26 und für den zweiten Rohrabschnitt 18 eine Mittelachse des zweiten Rohrabschnittes 27 definiert. Figur 3 zeigt den Eckverbinder 4 in perspektivischer Draufsicht aus einer anderen Richtung als Figur 2, wobei auf die Darstellung der anderen Teile verzichtet wird. Die in dem ersten Rohrabschnitt 17 ausgebildeten Tragstrukturaufnahme 6 und Aufnahmeraum 7 sind durch die Trennwand 8 voneinander getrennt. In dieser Ausführungsform weist die Trennwand 8 ein Durchgangsloch 19 auf, durch welches sich die Stockschraube 11 erstreckt, um einerseits die Verbindung zwischen dem Verbindungselement 5 und dem Eckverbinder 4, sowie andererseits zwischen dem Verbindungselement 5 und dem Stuhlbein 3 herzustellen. Auf der dem Verbindungselement 5 zugewandten Seite ist an der Trennwand 8 eine Haltefläche 23 ausgebildet. Diese Haltefläche 23 ist in Flächenkontakt mit der abgeflachten Seite 24 des Verbindungselementes 5, wobei die Beweglichkeit und Verdrehbarkeit des Verbindungselementes 5 innerhalb der Tragstrukturaufnahme 6 beschränkt wird.

Im zweiten Rohrabschnitt 18 ist eine Beinaufnahme 20 ausgebildet, in welche sich der zapfenartige Abschnitt 16 des Stuhlbeines 3 erstreckt. Die innere Oberfläche 21 der Beinaufnahme 20 ist dabei in flächigem Kontakt mit der äußeren Oberfläche des zapfenartigen Abschnittes 16, sodass es zu einem Formschluss zwischen Stuhlbein 3 und der Beinaufnahme 20 kommt. An dem zweiten Rohrabschnitt 18 ist um die Öffnung der Beinaufnahme 20 herum eine äußere Stirnfläche 22 ausgebildet, welche flächig mit dem Absatz 15 des Stuhlbeines 3 in Kontakt ist und den Eckverbinder 4 an dem Absatz 15 abstützt.

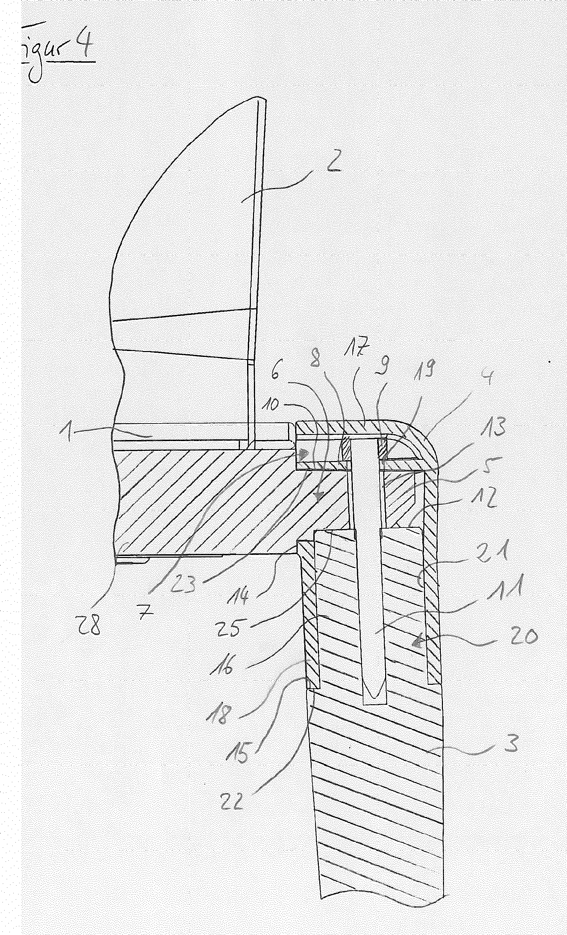

Figur 4 zeigt einen senkrechten Schnitt durch die in Figur 2 dargestellte Verbindung des vorderen linken Stuhlbeines 3 mit der Vorderzarge 28. Die Lage der Schnittebene ist so gewählt das die Längsachsen der beiden zylindrischen Rohrabschnitte 17, 18 in der Schnittebene liegen. Innerhalb des Eckverbinders 4 sind das Verbindungselement 5 und das Stuhlbein 3 kraftübertragend miteinander verbunden, wobei die auftretende Kraft zwischen diesen beiden Bauteilen direkt über deren flächigen Kontakt miteinander übertragen werden kann, sodass keine oder nur eine sehr geringe der daraus resultierenden Belastung durch den Eckverbinder 4 übertragen wird. Da diese Verbindung mittels einer Verschraubung hergestellt ist, ist sie lösbar. Alternativ kann diese Schraubverbindung auch unlösbar ausgeführt sein, zum Beispiel durch die Verwendung eines Sicherungslacks.

Um eine möglichst große und gleichmäßige Kontaktfläche zwischen Verbindungselement 5 und Stuhlbein 3 zu gewährleisten, sind die beiden einander kontaktierenden Flächen dieser Bauelemente einander entsprechend ausgebildet. Zu diesem Zweck ist die Stirnseite des Stuhlbeines 3 flach ausgebildet. Analog dazu ist die Unterseite des Verbindungselementes 5 welche mit der flachen Stirnseite 12 des Stuhlbeins 3 in Kontakt ist, ebenfalls abgeflacht ausgeführt.

In alternativen Ausführungen können Beine und Verbindungselement innerhalb des Eckverbinders auch voneinander beabstandet sein, sodass es zu keiner direkten Kraftübertragung zwischen ihnen kommt. Denkbar ist ebenfalls, dass sich zwischen dem Bein und dem Verbindungselement eine zusätzliche Wand des Eckverbinders erstreckt, welche den Eckverbinder zusätzlich stabilisieren kann.

Die vorliegende Ausführungsform ist werkzeuglos montierbar und wieder demontierbar. Zur Montage der Teile, wie sie auch in Figur 2 gezeigt sind, wird zunächst die Vierkantmutter 9 in den Aufnahmeraum 7 eingeführt, wobei sie zwischen den gegenüberliegenden Führungsflächen 10 verdrehsicher geführt wird und schließlich im hinteren Bereich der Aufnehmung 7 verharrt. Dabei ist die Gewindebohrung der Vierkantmutter 9 mit dem Durchgangsloch 19 in der Trennwand 8 fluchtend ausgerichtet. In einem nächsten Schritt wird das Verbindungselement 5 formschlüssig in die Tragstrukturaufnahme 6 eingeführt, bis die Stirnfläche 14 des Eckverbinders 4 an der seitlichen Oberfläche der Sitzfläche anstößt. Dabei ist die Bohrung 13 im Verbindungselement 5 mit dem Durchgangsloch 19 in der Trennwand 8 und der Gewindebohrung in der Vierkantmutter 9 fluchten ausgerichtet. Die einzelnen Komponenten können dabei so ausgelegt sein, dass das Durchgangsloch 19 und die Bohrung 13 einen ausreichend großen Durchmesser haben, um Fertigungstoleranzen auszugleichen und beispielsweise ein Fluchten der Bohrung 13 mit dem Durchgangsloch 19, der Vierkantmutter 9 und dem Verbindungselememt 5 zu gewährleisten.

Im Anschluss wird der zapfenartige Abschnitt 16 des Stuhlbeines 3 in die Beinaufnahme 20 des Eckverbinders 4 eingeführt. Durch die konzentrische Ausrichtung der äußeren Oberfläche des zapfenartigen Abschnittes 16 und der inneren Oberfläche der Beinaufnahme 21 kann die Stockschraube 11 leicht durch die Bohrung 13 im Verbindungselement 5 und das Durchgangsloch 19 der Trennwand 8 bis in die Vierkantmutter 9 geführt werden. Durch anschließende händische Drehung des gesamten Beines erfolgt die Verschraubung der Stockschraube 11 mit der Vierkantmutter 9, welche ihrerseits verdrehsicher an den Führungsflächen 10 im Aufnahmeraum 7 aufgenommen ist. Die Länge des zapfenartigen Abschnittes 16 ist hier so gewählt, dass die Stirnfläche22 des Stuhlbeines 3 kraftübertragend an dem Absatz 15 anliegt und Fertigungstoleranzen durch ein geringes Spiel zwischen Stirnseite 12 des Beines 3 und dem Verbindungselement 5 ausgeglichen werden. Die von der Tragstruktur auf das Bein wirkenden Kräfte werden dabei zu einem großen Teil, oder sogar vollständig, durch den Eckverbinder 4 übertragen.

In alternativen Ausführungsformen können mögliche Fertigungstoleranzen in der Länge des zapfenartigen Abschnittes 16 des Stuhlbeines 3 durch ein geringes Spiel zwischen der Stirnfläche 22 im zweiten Rohrabschnitt 18 und dem Absatz 15 des Stuhlbeines 3 ausgeglichen werden, sodass ein flächiger und zur Kraftübertragung geeigneter Kontakt zwischen der Stirnseite 12 des Stuhlbeines 3 und der Unterseite 25 des Verbindungselementes 5 gewährleistet ist. Ein großer Teil, oder sogar die komplette der von der Tragstruktur an das Bein geleiteten Kraft kann so direkt übertragen werden. Der Eckverbinder kann somit entlastet werden und unterstützt die Kraftübertragung, wobei er die Verbindung stabilisiert und gegen ein Verkippen sichert.

Zur Demontage der Verbindung wird analog mit dem Losschrauben des Stuhlbeines 3 begonnen um anschließend die zur Montage vorgenommenen Schritte in umgekehrter Reihenfolge rückwärts durchzuführen. Vorteilhaft für die einfache und werkzeuglose Montage und Demontage ist hierbei die verdrehsichere Aufnahme der Vierkantmutter 9 im Aufnahmeraum 7.

Die Verbindung des Stuhlbeines 3 mit der Vorderzarge 28 erfolgt im hiesigen Beispiel vollständig seitlich von der Sitzfläche und im Wesentlichen über das Verbindungselement 5. Dies ermöglicht eine funktionale Trennung der Verbindung mittels des Verbindungselementes 5 und der Sitzfläche 1. Die Sitzfläche 1 kann weniger abhängig von Erfordernissen, die an die Verbindung mit dem Stuhlbein 3 gestellt sind, ausgelegt werden, wodurch die vorliegende Ausführungsform der Erfindung eine größere gestalterische Freiheit beim Design des Stuhles oder eines anderen ähnlichen Möbelstückes erlaubt.

Die Stuhlbeine 3 erstrecken sich hier vollständig neben, und nicht unterhalb der Sitzfläche 1. Durch die, in Bezug auf den Massenschwerpunkt des Stuhles bzw. des Stuhles mit der darauf sitzenden Person, möglichst weit außerhalb angreifenden Stuhlbeine 3, welche ihrerseits die statischen und dynamischen Kräfte bei der Benutzung des Stuhles in den Boden ableiten, wird eine hohe Verkippsicherheit des Stuhles erreicht.

Ein weiterer vorteilhafter Effekt dieser Anordnung ist, dass die Stühle und ebenso andere ähnlich ausgelegte Möbelstücke gut stapelbar sind und somit eine platzsparende Lagerung erlauben. Um mehrere des beispielhaft gezeigten Stuhles zu stapeln, können die Sitzflächen 1 über einandergelegt werden, wobei die seitlich herausragenden Stuhlbeine 3 dabei nicht im Weg sind.

Die Erfindung ist nicht auf die Verwendung einer Stockschraube oder einer Schraubverbindung im Allgemeinen zur Herstellung der Verbindung festgelegt. Alternativ sind zum Beispiel auch Steckverbindungen, Klebeverbindungen, Schnappverbindungen, Bajonettverbindung oder dergleichen denkbar. Alternative Schraubverbindungen können so gewählt werden, dass sie von außen sichtbar und/oder zugänglich sind. Ebenfalls sind unterschiedliche Materialien für die Tragstruktur, das Bein und den Eckverbinder denkbar. Vorteilhaft wäre beispielsweise die Verwendung von Holz für die Tragstruktur und die Beine als bewährter Werkstoff für Möbel sowie eines Kunststoffes oder Polymer vor den Eckverbinder um dessen vergleichsweise komplizierte Struktur leicht herstellen zu können, zum Beispiel im Zuge eines Druck- oder Spritzgussverfahrens. Die Zargen oder anders ausgebildete Tragstrukturen können auch aus Metall, Kunst- oder Polymerwerkstoffen bestehen. Sowohl für Tragstruktur und Beine als auch für den Eckverbinder kommen dabei faserverstärkte Werkstoffe in Frage.

Der beispielhaft gezeigte Eckverbinder 4 ist außer dem Beispiel des gezeigten Stuhlbeines 3 und der Sitzfläche 1 auch an anders dimensionierte Tragstrukturen und Beine anpassbar. Solange die entsprechenden Beine und Tragstrukturen entsprechend geformte zapfenartige Abschnitte 16 bzw. Verbindungselemente 5 aufweisen, können auch größere und kleinere Sitzflächen bzw. kürzere und längere Stuhlbeine miteinander verbunden werden. Auch bei der Fertigung zahlreicher Varianten von verschieden dimensionierter Stühle, kann somit die Lagerhaltung vereinfacht werden, da für die unterschiedlich dimensionierten Stühle jeweils ein identisch dimensionierter Eckverbinder verwendet wird. Analog eignen sich unterschiedlich dimensionierte Eckverbinder um beispielsweise standardisierte Beine mit verschiedenen Tragstrukturen zu verbinden.

## Patentansprüche

1. Möbelstück mit einer Tragstruktur (28) und wenigstens einem Bein (3),
wobei das Bein (3) über eine Verbindung an die Tragstruktur (28) gekoppelt ist und ein zusätzlicher Eckverbinder (4) vorgesehen ist, wobei die Verbindung des Beines (3) mit der Tragstruktur (28) wenigstens teilweise innerhalb des Eckverbinders (4) ausgeführt ist und von der Tragstruktur (28) ein Verbindungselement (5) hervorragt, über welches die Verbindung der Tragstruktur (28) mit dem Bein hergestellt ist und der Eckverbinder (4) wenigstens einen Teil einer von der Tragstruktur (28) auf das Bein wirkenden Kraft überträgt und der Eckverbinder (4) eine Tragstrukturaufnahme (6) aufweist, in welcher das Verbindungselement (5) zumindest teilweise, insbesondere formschlüssig, aufgenommen ist
und das Verbindungselement (5) und das Bein (3) innerhalb der Eckverbindung (4) kraftübertragend, insbesondere lösbar, miteinander verbunden sind, wobei sich ein Verbindungsmittel (11) wenigstens bereichsweise durch das Bein (3), den Eckverbinder (4) und das Verbindungselement (5) erstreckt
und das Verbindungsmittel (11) durch ein Fixierungsteil (9) in seiner Position gehalten ist, **dadurch gekennzeichnet, dass**
das ganze Fixierungsteil (9), insbesondere formschlüssig, in einem Aufnahmeraum (7) in dem Eckverbinder aufgenommen ist.

2. Möbelstück gemäß einem der vorhergehenden Ansprüche, **dadurch gekennzeichnet, dass** der Eckverbinder (4) eine Beinaufnahme (20) aufweist, in welcher das Bein (3) zumindest teilweise, insbesondere formschlüssig, aufgenommen ist.

3. Möbelstück gemäß einem der vorherigen Ansprüche, **dadurch gekennzeichnet, dass** eine äußere Stirnfläche (14) des Eckverbinders an einer Oberfläche der Tragstruktur (28) abgestützt ist.

4. Möbelstück gemäß einem der Ansprüche 1 bis 3, **dadurch gekennzeichnet, dass** das Bein (3) einen Absatz (15) aufweist, wobei eine äußere Umfangsfläche des Eckverbinders (4) etwa fluchtend zu dem Absatz (15) ausgerichtet ist.

5. Möbelstück gemäß einem der Ansprüche 1 bis 4, **dadurch gekennzeichnet, dass** eine äußere Stirnfläche (22) des Eckverbinders (4) an einer Oberfläche des Beines (3), insbesondere an dem Absatz (15), abgestützt ist.

6. Möbelstück gemäß einem der Ansprüche 2 bis 5, **dadurch gekennzeichnet, dass** der Eckverbinder winkelstückartig zwei Rohrabschnitte (17, 18) aufweist, wobei in einem der Rohrabschnitte (17) die Tragstrukturaufnahme (6) ausgebildet ist und in dem anderen der Rohrabschnitte (18) die Beinaufnahme ausgebildet ist.

7. Möbelstück gemäß einem der vorherigen Ansprüche, **dadurch gekennzeichnet, dass** das Bein einen zapfenartigen Abschnitt (16) aufweist, welcher zumindest bereichsweise mit einer inneren Oberfläche (21) der Beinaufnahme in Kontakt ist und/oder wobei das Verbindungselement (5) und das Bein (3) innerhalb des Eckverbinders (4) in direktem Kontakt miteinander stehen, und von der Tragstruktur (28) an das Bein (3) übertragene Kräfte wenigstens annähernd vollständig über diesen Kontakt übertragen werden.

8. Möbelstück nach einem der Ansprüche 1 bis 7, **dadurch gekennzeichnet, dass** das Verbindungselement (5) wenigstens eine abgeflachte Seite (7) aufweist, welche in Kontakt mit einer Haltefläche (23) des Eckverbinders (4) ist und insbesondere die Verdrehbarkeit des Verbindungselementes (5) beschränkt..

9. Möbelstück gemäß Anspruch 8, **dadurch gekennzeichnet, dass** sich zwischen der Tragstrukturaufnahme und dem Aufnahmeraum (7) wenigstens bereichsweise eine Trennwand (8) erstreckt, an welcher insbesondere das Verbindungselement (5) und/oder das Fixierungsteil anliegen.

10. Möbelstück gemäß einem der Ansprüche 8 und 9, **dadurch gekennzeichnet, dass** das Fixierungsteil (9) an wenigstens einer Führungsfläche (10) des Eckverbinders (4) anliegt, welche die Bewegbarkeit des Fixierungsteiles beschränkt.

## Claims

1. A piece of furniture with a supporting structure (28) and at least one leg (3),
wherein the leg (3) is coupled to the supporting structure (28) via a connection and an additional corner connector (4) is provided, wherein the connection of the leg (3) to the supporting structure (28) is at least partially implemented within the corner connector (4) and a connecting element (5) projects from the supporting structure (28), via which the connection of the supporting structure (28) to the leg is established and the corner connector (4) transmits at least a part of a force acting from the supporting structure (28) on the leg and the corner connector (4) comprises a supporting structure receptacle (6), in which the connecting element (5) is received at least partially, in particular in a form-fitting manner,
and the connecting element (5) and the leg (3) are connected to one another within the corner connection (4) in a force-transmitting, in particular releasable, manner, a connecting means (11) extending at least in some regions through the leg (3), the corner connector (4) and the connecting element (5)
and the connecting means (11) is held in position by a fixing part (9),
**characterized in that**
the entire fixing part (9) is received, in particular in a form-fitting manner, in a receiving space (7) in the corner connector.

2. The piece of furniture according to one of the aforementioned claims, **characterized in that** the corner connector (4) has a leg receptacle (20) in which the leg (3) is at least partially received, in particular in a form-fitting manner.

3. The piece of furniture according to one of the aforementioned claims, **characterized in that** an outer end face (14) of the corner connector is supported on a surface of the supporting structure (28).

4. The piece of furniture according to one of the claims 1 to 3, **characterized in that** the leg (3) has a shoulder (15), wherein an outer peripheral surface of the corner connector (4) is aligned approximately flush with the shoulder (15).

5. The piece of furniture according to one of the claims 1 to 4, **characterized in that** an outer end face (22) of the corner connector (4) is supported on a surface of the leg (3), in particular on the shoulder (15).

6. The piece of furniture according to one of the claims 2 to 5, **characterized in that** the corner connector has two pipe sections (17, 18) in the manner of an angle piece, wherein the supporting structure receptacle (6) is formed in one of the pipe sections (17) and the leg receptacle is formed in the other of the pipe sections (18).

7. The piece of furniture according to one of the aforementioned claims, **characterized in that** the leg has a pin-like section (16) which is in contact, at least in some regions, with an inner surface (21) of the leg receptacle and/or wherein the connecting element (5) and the leg (3) are in direct contact with each other within the corner connector (4), and forces transmitted from the supporting structure (28) to the leg (3) are at least almost completely transmitted via this contact.

8. The piece of furniture according to one of the claims 1 to 7, **characterized in that** the connecting element (5) has at least one flattened side (7) which is in contact with a holding surface (23) of the corner connector (4) and in particular limits the rotatability of the connecting element (5).

9. The piece of furniture according to claim 8, **characterized in that** a partition wall (8), against which in particular the connecting element (5) and/or the fixing part rests, extends between the support structure receptacle and the receiving space (7) at least in some regions.

10. The piece of furniture according to one of the claims 8 and 9, **characterized in that** the fixing part (9) rests against at least one guide surface (10) of the corner connector (4), which limits the movability of the fixing part.

## Revendications

1. Meuble avec une structure de support (28) et au moins un pied (3),
où le pied (3) est couplé à la structure de support (28) via une connexion et un connecteur d'angle (4) supplémentaire est prévu, où la connexion du pied (3) à la structure de support (28) est au moins partiellement réalisée à l'intérieur du connecteur d'angle (4) et un élément de connexion (5) dépasse de la structure de support (28), par lequel la connexion de la structure de support (28) avec pied est établie et le connecteur d'angle (4) transmet au moins une partie de la force agissant de la structure de support (28) sur le pied et le connecteur d'angle (4) comporte un logement de structure de support (6), dans lequel l'élément de connexion (5) est au moins partiellement reçu, en particulier par liaison de forme,
et l'élément de connexion (5) et le pied (3) sont reliés l'un à l'autre à l'intérieur du connecteur d'angle (4) de manière à transmettre les forces, en particulier de manière détachable, où un moyen de connexion (11) s'étend au moins par région à travers le pied (3), le connecteur d'angle (4) et l'élément de connexion (5),
et le moyen de connexion (11) est maintenu dans sa position par une pièce de fixation (9),
**caractérisé en ce que**
l'ensemble de la pièce de fixation (9) est reçu, notamment par liaison de forme, dans un espace de réception (7) dans le connecteur d'angle.

2. Meuble selon l'une des revendications précédentes, **caractérisé en ce que** le connecteur d'angle (4) présente un logement de pied (20) dans lequel le pied (3) est reçu au moins partiellement, en particulier par liaison de forme.

3. Meuble selon l'une des revendications précédentes, **caractérisé en ce qu'**une face frontale extérieure (14) du connecteur d'angle s'appuie sur une surface de la structure de support (28).

4. Meuble selon l'une des revendications 1 à 3, **caractérisé en ce que** le pied (3) présente un épaulement (15), où une surface périphérique extérieure du connecteur d'angle (4) est alignée approximativement avec l'épaulement (15).

5. Meuble selon l'une des revendications 1 à 4, **caractérisé en ce qu'**une face frontale extérieure (22) du connecteur d'angle (4) s'appuie sur une surface du pied (3), en particulier sur l'épaulement (15).

6. Meuble selon l'une des revendications 2 à 5, **caractérisé en ce que** le connecteur d'angle comporte deux sections de tube (17, 18) à la manière d'une pièce d'angle, le logement de structure de support (6) étant formé dans l'une des sections de tube (17) et le logement de pied étant formé dans l'autre des sections de tube (18).

7. Meuble selon l'une des revendications précédentes, **caractérisé en ce que** le pied comporte une section (16) en forme de cheville qui est en contact, au moins par régions, avec une surface intérieure (21) du logement de pied et/ou où l'élément de connexion (5) et le pied (3) sont en contact direct l'un avec l'autre à l'intérieur du connecteur d'angle (4), et les forces transmises par la structure de support (28) au pied (3) sont au moins presque entièrement transmises par ce contact.

8. Meuble selon l'une des revendications 1 à 7, **caractérisé en ce que** l'élément de connexion (5) comporte au moins un côté aplati (7) qui est en contact avec une surface de maintien (23) du connecteur d'angle (4) et limite notamment la possibilité de rotation de l'élément de connexion (5).

9. Meuble selon la revendication 8, **caractérisé en ce qu'**une paroi de séparation (8), contre laquelle s'appuie notamment l'élément de connexion (5) et/ou la pièce de fixation, s'étend entre le logement de structure de support et l'espace de réception (7) au moins par régions.

10. Meuble selon l'une des revendications 8 et 9, **caractérisé en ce que** la partie de fixation (9) repose contre au moins une surface de guidage (10) du connecteur d'angle (4), ce qui limite la mobilité de la partie de fixation.
